# EUROPEAN PATENT APPLICATION

(11) **EP 4 343 388 A1**
(43) Date of publication of application: **27.03.2024**
(21) Application number: 22197838.0
(22) Date of filing: 26.09.2022
(51) Int. Cl.: G02B 3/00, G02B 5/18

(54) **DECORATIVE LIGHTING WITH REFRACTIVE AND DIFFRACTIVE LIGHTING DEVICES**

(71) Applicant: SUSS MicroOptics SA, 2068 Hauterive (CH)
(72) Inventor: Völkel, Reinhard, 2000 Neuchâtel (CH); Bremer, Christopher, 2000 Neuchâtel (CH); Noell, Wilfried, 2000 Neuchâtel (CH); Quaranta, Giorgio, 2000 Neuchâtel (CH); Schnieper, Marc, 1218 Le Grand-Saconnex (CH)
(74) Representative: P&TS SA (AG, Ltd.)

(57) **Abstract**

The present invention relates to a micro-lens based module (10) allowing to provide a first lighting effect in a functional area (FA) and a second lighting effect in a non-functional area (NA) by means of at least one light alteration area (31, 32, 33, 34) which are adapted to modify the incident light (L) so as to provide a modified light (ML, ML1, ML2) or a combination thereof, and to project the modified light (ML, ML1, ML2) exclusively toward the non-functional area (NA) so as to create or modulate a second lighting effect. The present invention further relates to a method of providing alighting effect in a non functional area.

## Description

### Technical domain

The present invention concerns a micro-lens based module and a projection device comprising the same. It relates in particular to a module and a device adapted for projecting a first lighting effect within a functional field and a second lighting effect in a second field considered as non functional. Typically, the second field or second area, non-functional, extends around the functional field. An important application is in the field of the automotive industry, such as for projecting light outside or inside a vehicle, although it is not limited thereto.

### Related art

Micro-lens arrays are currently developed to project light, or lighting effects, or even optical objects on remote surfaces. Animations can also be provided, as well as colour variations of the projected light.

The document US2011228231 provides examples of micro-lens array arrangements. Coloured objects can be projected by means of several combined micro-lens arrays each representing a primary colour. Transmissive LCD displays are used to this end.

The patent application WO2019223859 discloses example of micro-lens array comprising integrated coloured elements based on pigments.

The patent application PCT/IB2022/051034 provides examples of micro-arrays specifically adapted to produce animated coloured lighting effects.

Most of the efforts are up to now focused on the quality of the light projected in the functional area. A functional area usually denotes the central field of view or the central projection area. The quality relates for example to the resolution, the colour definition, the dynamic aspects of the projected light. However, the area outside the functional area or the central field of view is less considered. Such a surrounding area or non functional field is usually considered as useless or at least of secondary interest. Also, the optical quality of the peripheral zones is usually more difficult to control, or if it can be controlled, it is often by means of expensive solutions involving several complex and bulky optical elements. The peripheral areas are thus generally forgotten and let to some residual light.

Therefore, there is room to develop optical solutions allowing exploiting these peripheral areas to project specific lighting effects.

### Short disclosure of the invention

An aim of the present invention is the provision of an optical device allowing to project lighting effects extending outside a functional area, on a so-called non-functional area, usually dedicated to residual lighting. It is in particular an object to provide a device adapted to project lighting effects, either static or dynamic, in a field of view surrounding the central field of view. In particular, it is an aim to provide an optical device, or an optical projector such as a micro-lens array, adapted to provide a first light projection in a functional area, generally at the centre of the field of view, and a controlled second light projection extending outside the functional area, in a non functional area such as a zone peripheral to the functional area.

Another aim of the invention is to provide a compact optical device adapted to generate different lighting effects visible in different areas or field of views. It is in particular an aim to provide a compact optical device adapted to provide a functional lighting visible in a first area, such as a light beam or a projection of an optical object, and a so called non functional lighting extending in a second area, such as a decorative lighting.

Another aim of the present invention is to provide a cheap optical device adapted to generate a diversity of lighting effects in different areas.

According to the invention, these aims are attained by the object of the independent claims, and further detailed through the dependent claims.

With respect to what is known in the art, the invention provides a more compact and cheaper device for more diverse and complex applications.

### Short description of the drawings

Exemplar embodiments of the invention are disclosed in the description and illustrated by the following drawings :
- Figure 1a : Schematic representation of a micro-lens array projector according to the state of the art;
- Figure 1b: schematic representation of the functional and non functional areas with regard to a vehicle;
- Figure 1c: more specific example of the functional area FA according to the regulation ECE R112.
- Figure 2: Schematic representation of a micro-lens array projector according to an example of the present invention;
- Figure 2b: Schematic representation of an optical pathway of the micro-lens array projector according to an example of the present invention;
- Figure 3: Schematic representation of a micro-lens array projector according to another example of the present invention;
- Figure 4: Schematic representation of a micro-lens array projector according to another example of the present invention;
- Figure 5: Schematic representation of a micro-lens array projector according to another example of the present invention;

### Examples of embodiments of the present invention

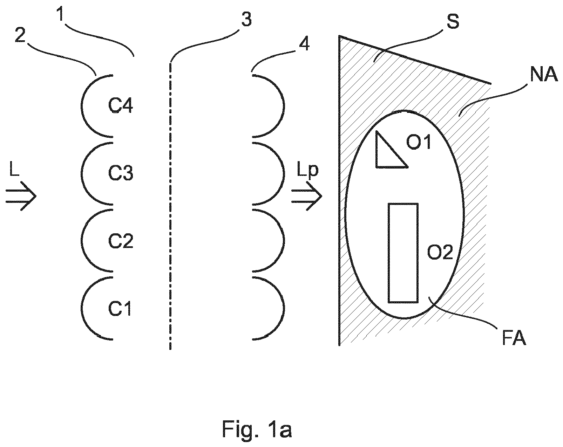

Figure 1a provides an example of a MLA projector 1 according to the state of the art. It typically comprises a first array of lenses 2, usually also a second array of lenses 4. It can in addition comprise a mask 3 comprising a micro-pattern vis-à-vis the lenses. The micro-pattern is placed to shade-out an incident light L, which is usually collimated. The projected light Lp having crossed the micro-pattern, can allow to provide on a surface S a single optical object O₁, O₂ representing the superposition of the images of the micro-pattern arranged on the mask 3. Some coloured transparent films may be combined to the mask 3 so that a coloured image can be projected on the surface S. The image is projected on a surface S in a so called functional area FA. Such a functional area FA defines a field wherein the image should be of good quality, that is to say avoiding or limiting optical disturbances such as diffraction, chromatic or dichroic aberrations, image distortions, etc, so that the projected objects are of good definition, including the definition of the colours, if any. The field outside the functional area FA corresponds to a non-functional area NA, wherein the projected light mainly results from residual light without real control on its quality.

The functional area FA and the non-functional area NA may be distinguished from each other for example by a predetermined threshold of light intensity. The light intensity in the non functional area NA may be determined as being less than a given fraction of the light intensity of the functional area FA. Such a given fraction can be for example less than 80%, 60%, 50%, 40%, 20%, 10% or less than the intensity of light occurring in the functional area. Alternatively, the functional area FA and the non-functional area NA may be distinguished from each other by means of a predetermined value of the light intensity. For example, the functional area FA can be defined so as to correspond to a light illumination of more than a given threshold such as 800 lumens, or more than 1000 lumen, and the non-functional NA area may be defined so as to correspond to a light illumination of less than a given threshold, such as less than 500 lumen, or less than 100 lumen. The threshold of light intensity can of course be adapted according to the needs. The light intensity in the functional area can correspond to a light of highest intensity or to light of an average intensity for a given surface unit. Thus, the functional area can be defined by its value of light intensity.

Alternatively or in addition, the functional area FA can correspond to a predetermined surface of illumination and the non-functional area NA can correspond to a surface surrounding the functional area. The geometry of the surface of illumination corresponding to the functional area can have any desired shape. For example, the surface corresponding to the functional area can be circular, elliptical or polygonal, or of a non-geometrical shape, depending on the needs.

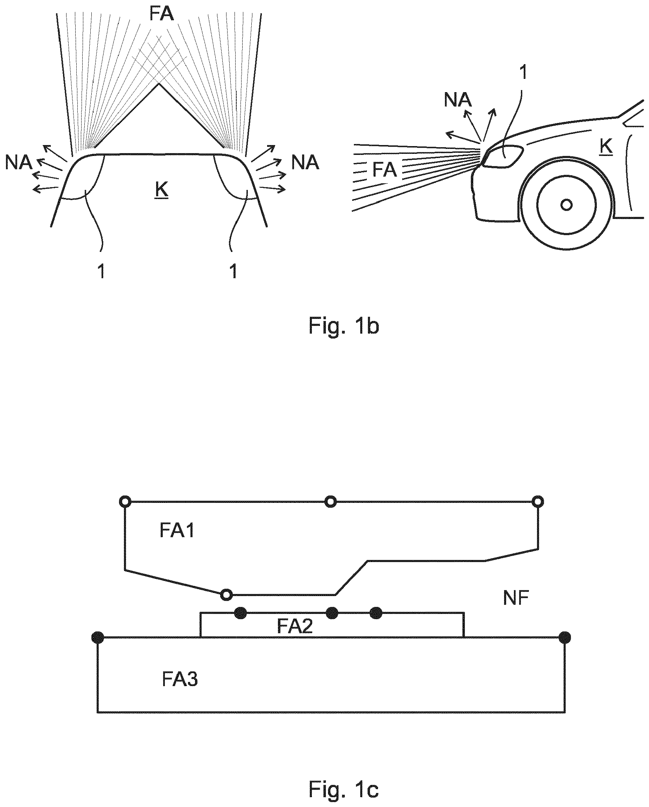

In case of a beam projector of a car K, the functional area FA defines the illuminated field before the car K, which is used to illuminate the pathway, and the non functional area NA defines the remaining space around the functional area FA, as shown in figure 1b and 1c. This is also applicable for stop lights at the back of a car. In this specific case, there is no necessary an image projected on a screen, as in figure 1a. The quality of the lighting in the functional area FA should however remain as high as possible or correspond to specific characteristics. More particularly, the intensity, direction, length of projection of the light can comply with some regulations. For example, regulation such as ECE R112 and R123 may define the functional area and/or the non-functional area of a luminous flux of light sources. A functional area FA can comprise several different sub-areas FA1, FA2, FA3. In such different sub areas FA1, FA2 and FA3, the light characteristics such as intensity, may differ from each other. Figure 1c shows an example of such distribution according to the regulation ECE R112, related to the low-beam photometric chart for headlamps. It represents the 2D light projection at 25 meters on a flat vertical screen, reproducing the real illumination on the road according to the European regulation. Other regulations may be applied depending on the needs.

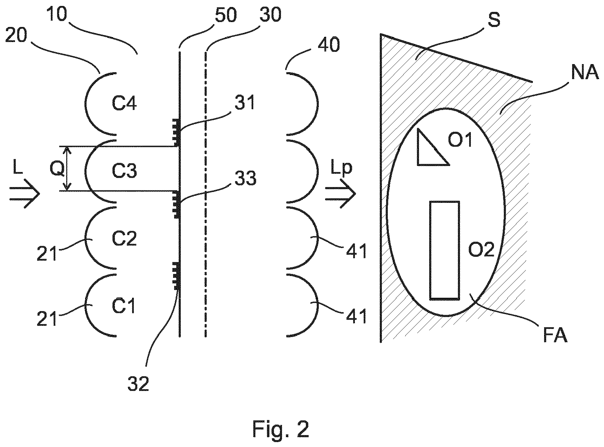

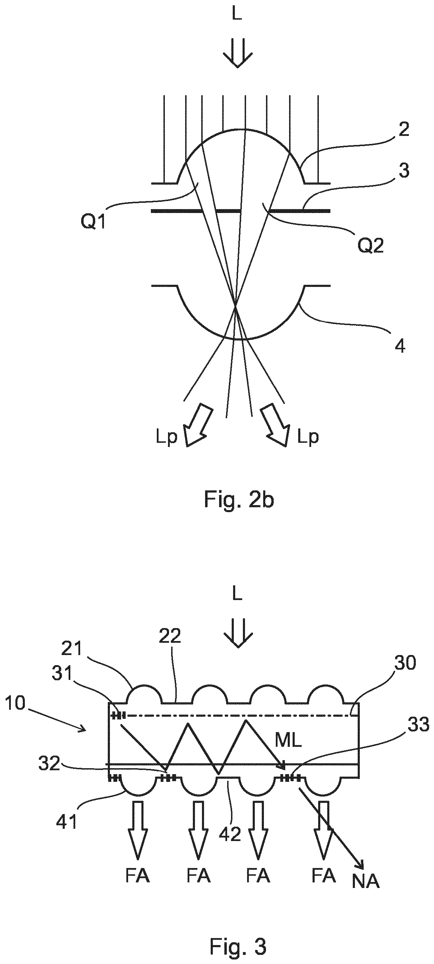

Figure 2 shows an example of a micro-lens based module 10 according to the present invention. It comprises at least one of an entrance lens 21 and an exit lens 41.

According to an embodiment the micro-lens based module 10 according to the present disclosure can comprise a first lens array 20 comprising several entrance lenses 21 and a second lens array 40 comprising several exit lenses 41.

The micro-lens based module 10 according to the present disclosure preferably comprises a combination of an entrance lens 21 and an exit lens 41 or a combination of a first lens array 20 and a second lens array 40.

The first lens array 20 and second 40 lens arrays are preferably arranged as parallel arrays. The entrance lens 21 or the first lens array 20 faces a light source and receives the incident light L emitted by the light source. Such a light source may be a LED, an OLED, or any other suitable light source. The entrance lens 21 or the first lens array 20 can be defined as condenser lens or lens array, or receiving lens or lens array, a field lens or lens array or entrance lens or lens array, since it corresponds to a face of the micro-lens based module through which the incident light enters. The first lens array 20 is preferably oriented with regard to the incident light L emitted by the light source at an angle comprised between around 0° and around 20°, where 0° means parallel to the optical axes of the lenses. The first lens array 20 comprises a number of entrance lenses 21 which can be comprised between 2 and more than 500. The number of entrance lenses 21 can however be adapted without real limitation, depending on the application. They can be arranged as a square, a line, a rectangle, a disk or according to any other suitable two dimensional arrangement. They are preferably arranged on a flat surface. They can however form together a surface having a three dimensional shape such as a global concave or a convex shape. The entrance lenses 21 are preferably designed so that their focal point is opposite to the light source. The incident light L can thus converge behind the lenses with regard to the light direction. Although all the entrance lenses 21 are preferably identical, this does not exclude that some of the entrance lenses 21 have different shapes or focal characteristics.

The second lens 41 or lens array 40 is arranged behind the first lens array 21, when present. The second lens array 40 can be arranged at a distance from the fist lens array 20, which is larger than the focal distance of the entrance lenses 21 and/or larger than the focal distance of the exit lenses 41. Other distances can be however possible depending on the needs. The term "behind" denotes here the usual relative position with regards to the direction of the incident light L, from the light source toward a remote surface S. The second lens array 40 comprises several exit lenses 41, adapted to project an image abroad. The exit lenses 41 are preferably designed so that their focal point is opposite to the remote surface S on which is projected the image. The projected image is thus magnified. The exit lenses 41 can thus be defined as projector lenses or projection lenses, since they correspond to a face of the micro-lens based module through which the light exits as a projected light Lp. As for the entrance lenses 21, the number of exit lenses 41 can be comprised between 2 and 500. There is however no real limitation. They can be arranged as a plane square, line, rectangle, disk or according to any other suitable two dimensional arrangement, or form together a surface having a global three dimensional shape such as a global concave or a convex shape. Although all the exit lenses 41 are preferably identical, this does not exclude that some of the exit lenses 41 have different shape or focal characteristics.

The terms "lens array" in the present disclosure denote a group of at least two combined lenses, arranged side by side, and preferably in direct contact with each other or in close vicinity without separating elements. A lens array may group together two, three, four or more lenses so that they form a line, a square, a circular shape or any other suitable arrangement. In a given lens array, all the lenses can be identical or have the same shape and dimensions. There are also periodically arranged, in example in parallel lines or quincunx. Alternatively, one or both of shape and size may vary for at least some of the lenses of a lens array. Also, the lenses of a given lens array may be arranged in a non-periodical arrangement. Several lens arrays may be juxtaposed. The distance separating two neighboured lens arrays may be larger than the distance between two lenses of a given lens array.

The entrance lenses 21, as well as the exit lenses 41, are understood as being micro lenses due to their preferred size characteristics. The lens diameter is preferably comprised between around 100 µm and around 900 µm. They can be manufactured according to any suitable known process including one or more of moulding, micro machining, imprint lithography, reactive ion etching of photoresist material, additive manufacturing steps. The micro-lenses of the present disclosure can include the suitable transparent organic or inorganic polymers, mineral material such as silica based material and any suitable material.

The entrance lenses 21, as well as the exit lenses 41, can all have a circular or semi-circular shape showing a circular symmetry. Alternatively, some or all of these lenses can independently from each other have another three dimensional shape, in particular a non-circular symmetry, such as an elliptical geometry.

The entrance lenses 21, as well as the exit lenses 41, can all have an homogenous smooth surface having consistent optical properties. Alternatively, the surface of some or all of these lenses can independently from each other comprise micrometric alterations. In particular, such alterations can impact or improve the optical properties of the lens or generate optical effects on the image projected in the functional area FA.

The entrance lenses 21, as well as the exit lenses 41, can all appear as standard conventional micro-lenses having the requested spherical shape. Alternatively, some or all of these lenses can independently from each other take the form of a Fresnel lens or any other diffraction-based optical element resulting in the same optical functions as conventional lenses.

In case both entrance lenses 21 and exit lenses 41 are present, they are facing each other so as to define an optical channel. In a preferred arrangement the lens vertex of a couple of entrance lens and exit lens, forming an optical channel, are aligned, meaning that they have a collinear optical axis. This however does not exclude that the vertex of at least some of couples of entrance and exit lenses of the micro-lens array are not aligned, meaning that the corresponding optical axis is slightly shifted with respect to each other. The light following the optical channel or most of this light is projected to the functional area FA.

The micro-lens based module 10 can optionally comprise a traditional patterning element 30 also known as a mask, comprising micro-shapes corresponding to the objects to be projected in the functional area FA. Alternatively, the micro-lens based module 10 is free of patterning element 30. In this last case, no specific image is projected on the functional area FA but only a amount of light.

The micro-lens based module 10 further comprises at least one light alteration area 31, 32, 33, 34 adapted to provide optical effects extending out of the functional area to the non functional area NA (figures 2 and 3). Such light alteration areas preferably do not alter the quality of light projected toward the functional area FA. The light alteration area 31, 32, 33, 34, modify the incident light L so as to create one or several modified light ML (fig.3). The modification of the incident light L includes the light diffraction, the light scattering, the light deviation, the light reflexion, the light absorption as well as a combination of several of these optical effects. The modification of the incident light L can alter the colour, the incidence, the coherence, the polarisation, the chromatic properties, as well as any other properties of the incident light L and combination thereof. It results that a modified light ML can be deviated, diffracted, refracted, absorbed, polarised, or submitted to a combination of several of these effects. According to one embodiment, the light alteration areas 31, 32, 33, 34 or part of them, are diffractive elements allowing to incouple the incident light L at different angles inside the micro-lens array. Under such conditions, the light alteration areas 31, 32, 33, 34 or part of them can redirect the light inside the micro-lens based module 10 in such a way that the light is in total internal reflexion regime (TIR). In this case, the micro-lens based module 10 or part of it, is used as a light guiding element in its transversal dimension.

According to another embodiment, the light alteration areas 31, 32, 33, 34, or part of them, are diffractive elements allowing to outcouple the incident light L inside the micro-lens array.

According to another embodiment, part of the light alteration areas 31, 32, 33 allow to incouple the incident light L and part of it allows to further disperse the already incoupled light. By this way, a richer diversity is provided to the angular and spectral distribution of the modified light ML. For example, the angular spread of the scattered beam can be maximized so as to be seen by an observer from different angular ranges.

The light alteration areas 31, 32, 33, 34 or part of them, further allow to project the modified light ML in the non-functional area NA. The above-mentioned light alterations result in a second lighting effect visible in the non-functional areas NA. Such a second lighting effect can be for example a local increase of brightness, some irisation, or some local light scattering or a combination of different optical effects. It can in addition result in a dynamic effect, as it will be better described below.

The light alteration areas 31, 32, 33, 34 preferably do not impact the light projected in the functional area FA, and thus do not alter the first lighting effect. In other words, when a fist lighting effect occurs in the functional area, the second lighting effect remains invisible in the functional area, if projected in this functional area. Whether the second lighting effect occurs in the functional area FA or not, it is only visible in the non-functional area NA or part of it.

According to an embodiment, the incident light L allows to project a first lighting effect toward the functional area FA or part of the functional area FA, having a first light intensity, and light alteration areas 31, 32, 33, 34 allow to provide a second lighting effect having a second light intensity, which is preferably lower than the first light intensity. It results that the second lighting effect is visible in the non functional area NA, while being masked by the first lighting effect of the functional area, of higher intensity.

According to an embodiment, the second lighting effect is exclusively projected to the non-functional area NA so as to not be visible inside the functional area FA, including upon external illumination when the incident light L is deactivated.

According to an embodiment, the second lighting effect is projected in both the functional area FA and the non functional area NA or part of the same, and is of a lower intensity than the first lighting effect so that it is only visible in the non functional area NA, or visible in both functional area FA and non functional area NA upon external light irradiation when the incident light L is deactivated.

According to an embodiment the intensity of the first lighting effect corresponds to the light intensity of the functional area FA.

According to an embodiment, the intensity of the second lighting effect corresponds to the light intensity of the non-functional area NA.

According to an embodiment, the light intensity of one or both of the first lighting effect and the second lighting effect differs from the light intensity of the corresponding functional FA and non functional NA areas. For example, a first lighting effect can correspond to an optical object such as a logo or a message projected onto a surface S inside the functional area FA so that the optical object is brighter than the surrounding zone inside the functional area FA. The second lighting effect can correspond to local increases of brightness in the non functional area providing a glittering effect.

Whether same or different of the light intensity of the non functional area, the light intensity of the corresponding second lighting effect is preferably not higher than the intensity of the first lighting effect, inside the functional area FA. The light intensity of the second lighting effect is preferably lower than the light intensity of the first lighting effect, at least inside the functional area.

According to an embodiment, the light alteration areas 31, 32, 33, 34 allow to provide a second lighting effect having a variable light intensity so that it remains lower that the light intensity of the first lighting effect inside the functional area. According to such an arrangement, the light intensity of the second lighting effect in the non functional area NA may be higher than the light intensity of the first lighting effect inside the functional area FA.

According to an embodiment, the light alteration areas 31, 32, 33, 34 are alternatively or in addition adapted to reflect and/or modify the light from one or several external light sources such as external spots or street lighting devices. According to such an arrangement, even in absence of incident light L, such as described above, or when no incident light is activated, one or several second lighting effects can still occur based on an external illumination. An external illumination here denotes any light source not dedicated to the present lens array. An external illumination can denote the natural daylight, an external lighting device such as a street light, spots of a garage, light beams of other vehicles, etc. In that case, specific shining and/or brightening effects can occur and provide for example a diamond aspect. In absence of first lighting effect in the functional area FA, the second lighting effect can also be visible in the functional area, or part of it, in addition to the non-functional area NA.

According to an embodiment, the second lighting effect provided with the dedicated incident light L can differ from a second lighting effect provided with an external illumination. The present micro-lens based module 10 can thus be used to provide a main second lighting effect under a dedicated incident light L and a secondary second lighting effect under external illumination.

According to an embodiment, the present invention also comprises a method of providing a main second lighting effect, by activating a dedicated incident light L, and providing a secondary second lighting effect by switching off the dedicated incident light L. The method can comprise an additional step of detecting a secondary lighting effect by switching off the dedicated incident light L, exposing the micro-lens based module 10 under an external illumination and observing whether a secondary second lighting effect is visible.

According to an embodiment, the micro-lens based module 10 further comprises at least one entrance lens or exit lens or couple of entrance and exit lenses, which are exclusively dedicated to provide a second lighting effect as described here. In other words, such lenses do not provide any first lighting effect. The second lighting effect may be projected exclusively outside the functional area FA, in the non functional area. Alternatively, the second lighting effect may also be projected in the functional area FA. In that specific case, it may not be visible when the other lenses of the micro-lens based module 10 provide a first lighting effect in the functional area FA. Such lenses, which are exclusively dedicated to provide a second lighting effect can be adapted to provide either a main second lighting effect, under the dedicated incident light L or a secondary second lighting effect under an external illumination, or a combination of both.

In a preferred embodiment, the light alteration areas 31, 32, 33, 34 are arranged outside the optical channel defined by the entrance lens 21 and the corresponding exit lens 41 so as to not alter the light which is projected on the functional area FA. In other words the light alteration areas 31, 32, 33, 34 are preferably outside the pathway of the light which is projected in the functional area FA. This is particularly convenient when the entrance lenses 21 of the first lens array 20 are separated from each other by a spacer 22, and/or when the exit lenses 41 of the second lens array 40 are separated from each other by a spacer 42 (figure 3). The length of a spacer 22, 42 may correspond to the diameter of the corresponding lenses 21, 41 or correspond to a fraction of this diameter, such as half or a third of the lens diameter, or be larger than the lens diameter, depending of the need.

According to another embodiment, the light alteration areas 31, 32, 33, 34 are arranged outside a predetermined portion Q of the optical channel (fig. 2) so as to not significantly impact the first lighting effect in the functional area FA. It is here understood that the predetermined portion Q corresponds to the optical pathway which is responsible for the first lighting effect, inside the functional area FA, resulting from the incident light L. The predetermined portion Q of the optical channel may correspond to a central section of 90% or 95% or 98% or more of the corresponding optical channel. Alternatively, a predetermined portion Q can correspond to a non central section of the optical channel, in particular in case of aspheric lenses or where only a portion of the lenses 21, 41 is involved in the first lighting effect inside the functional area FA. For example, the predetermined portion Q can correspond to an eccentric section of the optical channel. Alternatively, the predetermined portion Q of the optical channel can correspond to several subparts of the optical channel, which are responsible for the production of the first lighting effect inside the functional area. This is particularly convenient for arrangements wherein lenses are closed to each other, for example without spacer in between or with a very short spacer. This is of course also applicable when the optical channel is not defined by a couple of entrance 21 and exit 41 lenses, but by only one of an entrance and an exit lens. In this case, the predetermined portion Q may be related to the above fractions of the diameter of the corresponding lens. Figure 2b shows an example where the predetermined portion Q of the optical channel comprises several sub-portions Q1, Q2, which are responsible for the first lighting effect in the functional area FA.

In addition, when the modified light ML or part of it, is redirected, like after reflexion or diffusion, it is preferably not redirected so as to be visible in the functional area FA. In other words, the modified light ML preferably does not exits the micro-lens based module 10 through one of its exit lenses 41, or through a predetermined portion Q of an exit lens.

According to another embodiment, in case optical elements such as diffractive elements or gratings, are already present in the optical channel, or in the predetermined portion Q of the optical channel, to provide a first lighting effect in the functional area FA, such optical element may also participate to the modification of the incident light L and to the provision of a modified light **ML** dedicated to the second lighting effect in the non functional area **NA**. In that case, the modification of the incident light L to a modified light **ML** does not impact the light which is projected to the functional area **FA**. According to a specific embodiment, the light alteration areas 31, 32, 33, 34 are adapted to collect and modify the portion of light which is deviated from the main optical pathway by the optical elements present in the optical channel or in the predetermined portion Q of the optical channel.

The light alteration areas 31, 32, 33, 34 can be selected among diffractive elements, such as diffraction gratings, computer-generated holograms (CGH) or pseudo-random nano-scatterers and any corrugated material. The light alteration areas 31, 32, 33, 34 can alternatively or in addition comprise micro-prisms having different sizes and/or angles, diffusers with micro-elements, oblique surfaces, metallic layers adapted to provide plasmonic resonance, and a combination thereof.

According to an embodiment, some or all of the light alteration areas 31, 32, 33, 34 are arranged in a dedicated intermediate layer 50 transversal to the optical pathway, as visible in fig. 2. Such a dedicated layer 50 can be made of material having a high refractive index. In this case, the layer of high refractive index material can be patterned so that it does not include high refractive index material in the optical portion of the micro-lens based module 10 corresponding to the functional area FA. Alternatively, some or all of the light alteration areas 31, 32, 33, 34 can be arranged on a layer of material already present in the micro-lens based module 10 such as a patterning element 30, when present (fig. 3), a imprinted layer of polymers, or any layer of material internal to the micro-lens based module 10. Alternatively, some or all of the light alteration areas 31, 32, 33, 34 are arranged on an external surface of the micro-lens based module 10 such as on a spacer 22, 42, or on a peripheric portion of a lens 21, 41 or on the rim of the micro-lens based module 10. Alternatively or in addition, some light alteration areas can be created by using a fluorescent surface of OLED or micro-LED based surface.

Preferably, the light alteration areas 31, 32, 33, 34 are arranged on several different layers of the micro-lens based module 10 including the above-mentioned dedicated layer 50, patterning element 30, imprinted internal polymer, external surfaces such as spacers 22, 42, etc so as to properly guide and modify the incident light L. Some or all of the light alteration areas 31, 32, 33, 34 can take the form of a stack of sublayers within a given layer.

A combination of different types of light alteration areas 31, 32, 33, 34 can be included in a given layer, whether it is a dedicated layer 50, a patterning element 30, an internal imprinted polymer or an external surface such as a spacer 22, 42. For example a given layer can comprise one or several of a diffracting elements allowing incoupling light, reflecting areas and diffractive elements allowing scattering light. Any combination may be used depending on the needs.

The incident light L can thus be altered by a first light alteration areas 31, 32, 33, 34 on a first layer, and reflected by a second light alteration areas 31, 32, 33, 34 on a second layer so as to be further altered by a third light alteration areas 31, 32, 33, 34. Alternatively or in addition, part of the incident light L can be altered by an optical element present in the optical channel and further altered or reflected by one or several light alteration areas 31, 32, 33, 34 arranged on one or several different layers.

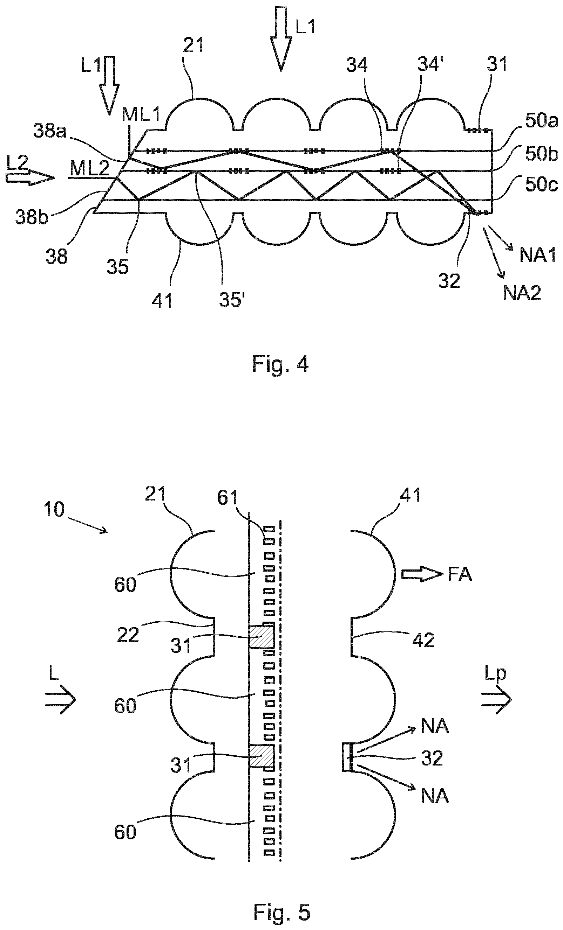

According to an example, as illustrated in figure 4, the micro-lens based module 10 can comprise several light alteration areas 34, arranged on a first layer 50a and several light alteration areas 34', arranged on a second layer 50b. The light alteration areas 34, of the first layer 50a and 34' of the second layer 50b are arranged so as to diffract and/or reflect and/or refract the incident light L1 along a first pathway corresponding to a first modified light ML1. One or several light alteration areas 32 are placed on an external surface of the micro-lens based module 10 so that the first modified light ML1 is visible in a first non functional area NA1 or to provide a specific lighting effect in the non functional area NA.

The micro-lens based module 10 further comprises several light alteration areas 35' properly distributed on an internal layer and several light alteration areas 35 properly distributed on a third layer 50c so as to diffract and/or reflect and/or refract the incident light along a second pathway corresponding to a second modified light ML2. One or several light alteration areas 32 are placed on an external surface of the micro-lens based module 10 so that the second modified light ML2 is visible in a second non functional area NA2 or to provide a specific lighting effect in the non functional area NA.

The light alteration areas 35' and 34' can be of the same type or of different type. They can be arranged on a common second layer 50b. Alternatively, the internal layer comprising the light alteration areas 35', related to the second modified light ML2, ca be different from the second layer 50b, comprising the light alteration areas 34', related to the first modified light ML1. Of course, the first ML1 and the second ML2 modified lights can overlap each other and/or be modified at least partly by some common light alteration areas.

According to an embodiment, the incident light L used to provide the first modified light ML1 and the second modified light ML2 originates from a common light source. For example, a type of light alteration areas 31, 32, 33, 34 can modify the incident light L so as to provide a first modified light ML1 and another type of light alteration areas 31, 32, 33 can modify the incident light L so as to provide a second modified light ML2.

According to another embodiment, the micro-lens based module 10 comprises one or several surfaces 38, oriented at an angle comprised between 10° and 80°, such as 40° to 60°, with regard to the incident light L. In this case the surface 38 is an oblique surface. Alternatively, the surface 38 can be oriented perpendicular to the incident light L, that is to say at 90°. The surface or surfaces 38 can be generally designated as side surfaces. According to such arrangement, the incident light L being orthogonal to the micro-lens based module 10 crosses the surface or surfaces 38 so as to provide at least a first modified light ML1. A second modified light ML2 can also be provided, depending on the place 38a, 38b the incident light L crosses the surface or surfaces 38. The surface or surfaces 38 is preferably one or several of the edges of the micro-lens array.

In addition, the surface or surfaces 38 can comprise several domains 38a, 38b providing different optical effects. For example, the refractive index can differ from one domain 38a, 38b to the other. Alternatively or in addition, the diffraction properties, the reflexion properties can vary from one domain to the other 38a, 38b. By this way, the incident light L, arriving from a unique source and entering the micro-lens based module 10 by these different domains 38a, 38b, provides different lighting effects.

According to a specific arrangement, the surface or surfaces 38 can be obturated on demand so as to bloc or allow the incident light L crossing said surface or surfaces 38. A sliding obturator can be used to this end, such as a translationally sliding obturator or a rotationally sliding obturator (not shown). In case several different domains 38a, 38b are provided, they can be independently obturated so as to provide a corresponding specific modified light ML.

An obturator may be a simple on/off device, allowing to transmit or bloc the incident light L. Alternatively an obturator can comprise one or several areas having distinct optical effects. Such areas can for example comprise diffracting elements, polarising elements, obturating elements, reflective element etc.. By this way, different optical effects can be obtained according to the position of the obturator. For example, a polarizing area can be placed in coincidence with a specific domain 38a, 38b so as to obtain a specific lighting effect.

The above-mentioned different domains 38a, 38b and obturators can also be envisaged on edges of the micro-lens array in absence of oblique surface. In this case, additional light sources can be provided so as to illuminate the edges of the micro-lens array.

According to another embodiment, the micro-lens based module 10 comprises a first incident light L1 and a second incident light L2. The first incident light L1 can be directed according to the optical axis of the micro-lens based module 10 as described before. A second incident light L2 can be oriented orthogonally to the first one L1. In other words, the second incident light L2 can be oriented parallel to the micro-lens array, or orthogonal to the first incident light L1, so as to illuminate one of its edges. The second incident light L2 may also be oriented at a different angles with regard to the first incident light L1. For example, it can be oriented at an angle comprised between 20° and 170°, such as between 40° and 130°. Any other suitable orientation can also be defined according to the needs. A second incident light L2 can be directly glued on the lens array, for example at a specific height, so as to provide a specific modified light ML. For example, referring to figure 4, a second incident light L2 can be provided so as to illuminate a specific domain 38b, resulting in a second modified light ML2. Several different incident lights can be provided in a way to illuminate different transversal areas of the micro-lens array. Alternatively, the second incident light L2 can be unique and illuminate the full edge of the micro-lens array.

According to another embodiment, the second incident light L2 is oriented parallel to the first incident light L1. In this case, it can emit different wavelengths so as to provide different optical effects, in particular with respect to the light alteration areas 31, 32, 33, 34. Alternatively or in addition, the second incident light L2 illuminates only a subpart of the lens array, such as a reduced number of lenses, or an area comprising specific light alteration areas 31, 32, 33, 34. For example, the second incident light L2 can be directed to the rim of the micro-lens array, wherein specific light alteration areas 31, 32, 33, 34 can be arranged.

Although a second incident light L2 is here mentioned, this does not exclude that a third and a fourth incident lights are used, being each specifically oriented and/or having each specific optical properties.

Also, the embodiments described here are not mutually exclusive. For example, second incident light L2 having different wavelengths can be oriented either parallel or non-parallel to the first incident light L1 independently of the arrangement of the micro-lens array and the light alteration areas 31, 32, 33, 34. All mixt combinations of the embodiments here-described can of course be envisaged.

By means of such second incident lights L2 and potential additional incident lights, dynamic animations can be provided on the non-functional areas NA by switching on and off the second incident light L2 and/or the additional incident lights. Alternatively or in addition, dynamic animation can be provided by sliding an obturator or several obturators against second incident light L2 and/or additional incident lights. Optical animation can comprise increase and decrease of brightness, scattering, variation of coloration, apparition and disappearance of lighting effects etc.. and is exclusively localised in the non functional area NA.

The above-described light alteration areas 31, 32, 33, 34 and second lighting effects in non-functional areas NA are preferably combined to the first lighting effect of the functional area FA usually produced by any known micro-lens array. For example, any part above-described can be combined to a micro-lens based module as described in the patent application PCT/IB2022/051034.

More particularly, figure 5 provides an example of a micro-lens based module 10 having the above-described light alteration areas 31, 32 combined to one or several light alteration layers 60 adapted to provide lighting effect in a functional area FA. Such light alteration layer 60 can comprise any suitable optical elements 61 adapted to provide a first lighting effect, like projection of an optical object O1, O2. Such optical elements 61 includes nanostructured materials, which may comprise suitable local corrugations, arranged in periodical sequences or non periodical sequences, arranged on a same or different plans. The optical elements 61 can have polarizing effects allowing to modulate the intensity and/or the colour of the projected light Lp or not. The light alteration layer 60 can comprise several domains corresponding to several objects **O1**, **O2** to be projected and which can be independently projected. The light alteration layer 60 can comprise one or several metallic layer adapted to provide plasmonic resonances. The light alteration layer 60 can comprise nanoparticles embedded in a dielectric material, and/or a metasurface having metallic pillars embedded in a polymer. The light alteration layer 60 can denote an interference-based layer or a combination of several interference-based layers comprising one or several Interference domains. The light alteration layer 60 can included or be combined to a patterning element, such as superimposed or juxtaposed, being in close contact with such a patterning element.

The present description also encompasses any projection device comprising one or more micro-lens based module 10 as here described. Such projection device can be for example a head lamp of a vehicle K or an image projection device adapted to project an optical object on a remote surface. To this end, the projection device at least one light source adapted to emit a first incident light L. The incident light L can be directed at an angle of 90° with regard to the plane of the micro-lens based module 10 so to follow the corresponding optical channels. Alternatively, the incident light L can be oriented with regard to the plane of the micro-lens module at an angle comprised between around 0° and around 20°. A projection device according to the present description can comprise one or several additional incident lights such as a second incident light L2. Such a second incident light can be oriented at an angle with the first incident light comprised between 20° and 160°, such as 90°, or parallel to the first incident light L1. The described projection device further comprises the necessary source of energy, such as a battery. Alternatively or in addition, it comprises the suitable electrical connection means allowing its connection to a source of energy. The projection device may in addition comprise or be connected to a command interface and a command unit, allowing to initiate, stop, modulate at least the second lighting effect in the non functional area NA. Such a command interface can be a sticker, a button, a tactile command, or any other human-machine interface. The command unit may be a computer, an onboard computer, or any computing device, potentially adapted to provide automatic instructions.

The present description also covers a vehicle comprising a micro-lens array here described or a projection device here described. Such a vehicle may be a car, a bicycle, a motorbike, a truck, a plane, a boat, a train, a bus, a tram or any other vehicle. The micro lens array may be arranged so as to illuminate the outside of the vehicle, in particular in case of headlamps. Alternatively, the micro lens array can illuminate an internal part of the vehicle, in particular for courtoisie messages or light ambiances or safety messages.

The present description further relates to a method of providing a second lighting effect extending in a non functional area NA. Such a second lighting effect can be provided in addition to a first lighting effect occurring in a functional area FA. Both first and second lighting effects are obtained by illumination of a micro-lens based module 10 here described by at least one incident light L, L1, L2 arranged as above-described. The method comprises a step modifying the incident light L, L1, L2 or part of it, by mean of one or several light alteration area 31, 32, 33, 34 arranged as described here. In particular the light alteration area 31, 32, 33, 34 are preferably arranged outside the optical channels of the micro-lens based module, or arranged outside a predetermined portion Q of the optical channel. They create a modified light ML or a combination of several modified lights ML1, ML2.

The present method further comprises a step of projecting the modified light or the combination of several modified lights in a non-functional area NA. This projection is performed by mean of at least one of the light alteration area 31, 32, 33, 34 above-described, and is visible outside the functional area FA so as to provide said second lighting effect in a non functional area NA. In particular, it is preferably not visible inside the functional area in presence of a first lighting effect, which occurs upon activating at least one incident light L1, L2. That is to say that it may be also visible inside the functional area FA in absence a first lighting effect, for example, in case the incident lights L1, L2 are deactivated and that external lights are present.

The present method can further comprise a step of dynamically modulating the modified light ML. The modulation can be performed by the polarisation or the variation of the polarisation of the incident light. Alternatively or in addition, it can be done by varying the incidence angle of the incident light, or its colour or any of its optical properties. Ignition and extinction of an incident light can of course be done to generate and suppress such a second lighting effect.

### reference symbols in the figures

- 1, 10: Microlens array
- 2, 20: first array of lenses
- 21: Entrance lens
- 22,42: Spacer
- 3,: mask
- 30: Patterning element
- 31, 32, 33, 34: Light alteration area
- 38: Side surfaces
- 4, 40: second array of lenses
- 41: Exit lens
- 50: Intermediate dedicated layer
- 50a: First layer
- 50b: Second layer
- 50c: Third layer
- L: Incident light
- Lp: Projected light
- S: surface
- 01, 02: Optical objects
- FA: Functional area
- NA: Non-functional area
- K: Car
- Q, Q1, Q2: predetermined fraction of optical channel or lens diameter
- L, L1, L2: Incident light

## Claims

1. A micro-lens based module (10) comprising one or several entrance lenses (21), one or several exit lenses (41) or a combination of one or several entrance lenses and exit lenses, each one of a entrance lenses (21), exit lenses (41) or combination thereof defining an optical channel, the micro-lens based module being adapted for projecting a projected light (Lp) from one or several incident lights (L, L1, L2), said projected light providing a first lighting effect in a functional area (FA) and a second lighting effect visible at least in a non-functional area (NA),
**Characterized in that**
- said micro-lens based module comprises at least one light alteration area (31, 32, 33, 34) adapted to create or modulate said second lighting effect,
- said at least one light alteration area (31, 32, 33, 34) being arranged outside said optical channels or outside a predetermined portion (Q) of such an optical channel so as to have no effect on the first lighting effect occurring in said functional area (FA),
- said predetermined portion (Q) corresponding to the part of the optical pathway responsible for the production of said first lighting effect inside the functional area (FA) upon activation of said one or several incident lights (L, L1, L2).

2. Micro-lens based module according to claim 1 wherein said predetermined portion (Q) of said optical channel corresponds to a central part covering 90% or 95% or 98% or more of the section of said optical channel, or a eccentric part, or a combination or several subparts of the optical channel.

3. Micro-lens based module according to one of claims 1 and 2, wherein said functional area (FA) is defined by at least one predetermined surface or by at least one value of light intensity or a combination thereof.

4. Micro-lens based module according to one of claims 1 to 3, wherein said at least one light alteration area (31, 32, 33, 34) is arranged on one or more of a dedicated layer (50), a patterning element (30), an internal imprinted polymer and an external surface of said micro-lens based module.

5. Micro-lens based module according to one of claims 1 to 4, wherein said at least one light alteration area (31, 32, 33, 34) is independently selected from a diffracting element, such as diffraction gratings, computer-generated holograms (CGH) or pseudo-random nano-scatterers and any corrugated material; micro-prisms having different sizes and/or angles; diffusers with micro-elements; oblique surfaces; metallic layers adapted to provide plasmonic resonance, and any combination thereof.

6. Micro-lens based module according to one of claims 1 to 5, further comprising at least one side surface (38), oriented at an angle comprised between 10° to 90° with regard to said incident light (L).

7. Micro-lens based module according to one of claims 1 to 6, wherein said incident light (L) comprises a first incident light (L1) and a second incident light (L2), said first incident light (L1) corresponding to the optical axis of said micro-lens based module and said second incident light (L2) being oriented at an angle with the first incident light comprised between 20° and 160° so as to illuminate an edge of said micro-lens based module, or being oriented parallel to the first incident light (L1).

8. Micro-lens based module according to one of claims 1 to 7, wherein one or more edges of said micro-lens based module comprises one or more domain (38a), (38b) each one having specific refractive, diffractive, and/or reflective properties.

9. Micro-lens based module according to one of claims 6 to 8, further comprising one or more obturating elements.

10. Micro-lens based module according to claim 9, said obturating element being arranged on said surface (38) or on an edge of the micro-lens array facing a second incident light (L2).

11. Micro-lens array according to claims 9 or 10, said obturating element comprising one or several areas each having optical effects selected among diffraction, refraction, diffusion, polarization, and a combination thereof.

12. Micro-lens array according to one of claims 1 to 11, further comprising one or several light alteration layers (60) adapted to provide said first lighting effect in a functional area (FA).

13. Micro-lens array according to claim 12, said light alteration layers (60) comprising one or several optical elements (61) selected from nanostructured materials, optionally comprising local corrugations and arranged in periodical sequences or non periodical sequences, polarizing elements, one or several metallic layer adapted to provide plasmonic resonances, or a combination thereof.

14. A projection device comprising one or more micro-lens based module (10) according to one of claims 1 to 12, at least one light source adapted to emit a first incident light (L1), wherein the incident light (L) with regard to said micro-lens based module is comprised between around 0° and around 20° and optionally one or several second light sources emitting second incident lights (L2) oriented at an angle with the first incident light comprised between 20° and 160°.

15. Vehicle comprising a micro-lens array according to one of claims 1 to 13, or a projection device according to claim 14.

16. Method of providing a second lighting effect visible in a non functional area (NA) while providing a first lighting effect in a functional area (FA) wherein the second lighting effect remains invisible, by illumination of a micro-lens based module by at least one incident light (L, L1, L2) according to one of claims 1 to 13, the method comprising the steps of:
- modifying said at least one incident light (L, L1, L2) or part of it, by mean of at least one light alteration area (31, 32, 33, 34) arranged outside the optical channels or outside a predetermined portion (Q) of the optical channels of said micro-lens based module, so as to create a modified light (ML), and
- projecting said modified light (ML) so that it is visible in a non-functional area (NA) by mean of at least one light alteration area (31, 32, 33, 34) so as to provide said second lighting effect.

17. Method according to claim 16, further comprising an optional step of dynamically modulating one or more of the polarisation, the incidence angle and the colour of one or several of said incident light (L, L1, L2) so as to provide a dynamic lighting effect in the non-functional area (NA).
